# EUROPÄISCHE PATENTANMELDUNG

(11) **EP 3 401 747 A1**
(43) Veröffentlichungstag der Anmeldung: **14.11.2018**
(21) Anmeldenummer: 17170455.4
(22) Anmeldetag: 10.05.2017
(51) Int. Cl.: G05B 19/409

(54) **VERFAHREN ZUM BETRIEB EINER NUMERISCHEN GESTEUERTEN WERKZEUGMASCHINE SOWIE TEILEPROGRAMM DAZU**

(71) Anmelder: Siemens Aktiengesellschaft, 80333 München (DE)
(72) Erfinder: Bretschneider, Jochen, 73732 Esslingen (DE); Scheuermann, Uwe, 90431 Nürnberg (DE)

(57) **Zusammenfassung**

Eine Werkzeugmaschine (2) ist mit einer numerischen Steuerung (4) mit einer Benutzerschnittstelle (8) verbunden. In der numerischen Steuerung (4) ist ein Teileprogramm (10) vorhanden, das eine Folge von Anweisungen zur Bearbeitung eines Werkstücks umfasst. Die Werkzeugmaschine (2) bearbeitet das Werkstück entsprechend der Folge von Anweisungen. In Bezug zu einer Anweisung oder einer Folge von Anweisungen wird mindestens eine Zusatzinformation gespeichert (18, 22), die eine zu der Anweisung oder der Folge von Anweisungen gehörende konkrete Bearbeitung und/oder konkrete Situation erläutert. Die mindestens eine Zusatzinformation (18, 22) steht für eine Bearbeitung eines weiteren Werkstücks wiederum in Bezug zu der Anweisung oder der Folge von Anweisungen zur Verfügung (26, 28, 30, 32).

## Beschreibung

Die vorliegende Erfindung betrifft ein Verfahren zum Betrieb einer numerischen gesteuerten Werkzeugmaschine mit einer mit der Werkzeugmaschine verbundenen numerischen Steuerung mit einer Benutzerschnittstelle und mit einem in der numerischen Steuerung vorhandenen Teileprogramm, wobei das Teileprogramm eine Folge von Anweisungen zur Bearbeitung eines Werkstücks umfasst und wobei die Werkzeugmaschine entsprechend der Folge von Anweisungen das Werkstück bearbeitet.

Die Erfindung betrifft weiterhin ein Teileprogramm zur Bearbeitung eines Werkstücks mit einer Werkzeugmaschine, die mit einer numerischen Steuerung verbunden ist, umfassend Anweisungen, die bei Ausführung des Teileprogramms durch die Werkzeugmaschine diese zusammen mit der numerischen Steuerung veranlassen, ein derartiges Verfahren auszuführen.

Der Aufbau und die Funktion von numerisch gesteuerten Maschinen (CNC-Maschinen) sind ebenso vielfältig, wie es verschiedene Fertigungstechnologien gibt. Eine wesentliche Aufgabe einer numerisch gesteuerten Werkzeugmaschine ist es, Bearbeitungsaufgaben von Werkstücken mit vorgebbarer Präzision automatisch zu erledigen. Die Arbeits- und Bewegungsabläufe werden mit Hilfe von sequentiellen Steuerbefehlen programmiert. Sie bilden ein Teileprogramm mit einer Folge von Anweisungen an die Werkzeugmaschine zur Bearbeitung des Werkstücks. Die Steuerbefehle werden von der Steuerung interpretiert und in entsprechende Signale für die Maschinenantriebe umgesetzt. Die Steuerbefehle bestehen aus Angaben, die die Relativlage zwischen Werkzeug und Werkstück kennzeichnen. Maschinenseitig festgelegte Schaltfunktionen erleichtern häufig wiederkehrende Aufgaben, wie Werkzeug- oder Werkstückwechsel.

Die Abarbeitung eines Teileprogramms mit einer CNC-Maschine erfolgt beispielsweise im Werkstattbetrieb unter der Aufsicht eines Maschinenbedieners. Der Maschinenbediener hat dabei die Aufgabe, bei neuen Bearbeitungen oder neuen Teileprogrammen das Einfahren auf der CNC-Maschine sicher zu bewerkstelligen. Dabei wird beispielsweise geprüft, ob der Rohling zum Teileprogramm passt, ob die Vorrichtungen geeignet sind oder angepasst werden müssen, usw. Weiterhin ermittelt der Maschinenbediener die bestmögliche Aufspannung im Arbeitsraum der CNC-Maschine. Er überprüft auch, ob die benötigten Werkzeuge in der notwendigen Konfiguration (z.B. Halterung, Auskragung) in der CNC-Maschine geladen sind. Wichtig ist auch die Prüfung, ob das Teileprogramm lauffähig ist. Dies geschieht beispielsweise durch eine Simulation der Bearbeitung.

Vor der Bearbeitung des Werkstücks sind für den Maschinenbediener Informationen über den Bearbeitungsablauf hilfreich. Zu diesen Informationen gehören beispielsweise die voraussichtliche Bearbeitungszeit, Werkzeugstandzeiten, technische Zeichnungen, eingesetzte Fertigungstechnologien, usw.

Viele der vorstehend genannten Informationen sind heute nicht an der CNC-Maschine vorhanden. Der Maschinenbediener verliert wertvolle Zeit mit der Informationsbeschaffung oder er muss auf der Basis von Annahmen arbeiten.

Allerdings bieten heute bekannte Teileprogramme die Möglichkeit, über vom Programmierer eingefügte Message-Befehle Informationen und Hinweise an den Maschinenbediener zu geben.

Gibt es Fehler im CNC-Teileprogramm, werden diese üblicherweise in einer neuen Version des Programms beseitigt. Für die Fertigung von Folgeaufträgen wird dann die neueste Version verwendet.

Der Maschinenbediener erhält heute in aller Regel einen Fertigungsauftrag mit relevanten Informationen zur Werkstückbearbeitung als Papierunterlagen. Darüber hinaus werden relevante Informationen auch elektronisch auf einem Server in einem entsprechenden Werkstückverzeichnis bereitgestellt, z.B. als DXF-Datei, PDF-Datei, Word-Datei oder JPG-Datei.

Der Erfindung liegt die Aufgabe zugrunde, Möglichkeiten zum Betrieb der eingangs genannten numerisch gesteuerten Werkzeugmaschine anzugeben, die es ermöglichen, die Rüstzeiten an einer Werkzeugmaschine, insbesondere bei einer Wiederholung eines Bearbeitungsauftrags, zur Bearbeitung eines Werkstücks zu verringern.

Die Aufgabe wird durch ein Verfahren mit den Merkmalen des Anspruchs 1 gelöst. Vorteilhafte Ausgestaltungen des Verfahrens sind Gegenstand der abhängigen Ansprüche 2 bis 12.

Erfindungsgemäß wird ein Verfahren der eingangs genannten Art dadurch ausgestaltet, dass in Bezug zu einer Anweisung oder einer Folge von Anweisungen mindestens eine Zusatzinformation gespeichert wird, die eine zu der Anweisung oder der Folge von Anweisungen gehörende konkrete Bearbeitung und/oder konkrete Situation erläutert, und dass die mindestens eine Zusatzinformation für eine Bearbeitung eines weiteren Werkstücks wiederum in Bezug zu der Anweisung oder der Folge von Anweisungen zur Verfügung steht. Beispielsweise kann die Zusatzinformation einem Benutzer über eine Benutzerschnittstelle angezeigt werden. Damit steht für die Bearbeitung des Werkstücks wichtige und hilfreiche Information für einen nachfolgenden Fertigungsauftrag des gleichen Werkstücks direkt und unmittelbar zur Verfügung und muss nicht nochmals zeitaufwändig zusammengetragen werden.

Gemäß den Merkmalen des Anspruchs 2 kann die das Abspeichern und/oder das Abrufen der Zusatzinformation betreffende Funktionalität von dem Benutzer über die Benutzerschnittstelle nach Bedarf aktiviert oder gesperrt werden. So kann bei einer Wiederholung der Fertigung beispielsweise festgelegt werden, ob früher ermittelte Zusatzinformationen ignoriert, automatisch genutzt oder manuell bestätigt werden müssen.

Gemäß den Merkmalen des Anspruchs 3 wird die mindestens eine Zusatzinformation automatisch während der Bearbeitung des Werkstücks ermittelt und gespeichert. Nach einer Aktivierung der automatischen Aufzeichnung von Zusatzinformationen werden beispielsweise Informationen zum Fertigungsverlauf des Werkstücks gesammelt und gespeichert. Die automatische Aufzeichnung umfasst beispielsweise die Überschreitung von Grenzwerten, wie maximale Bahnabweichung und/oder maximale Spindelmomente, Unterbrechungen des Fertigungsprogramms einschließlich der Gründe dafür, Reduzierung/Erhöhung von Bahnoverride und/ oder Spindeldrehzahloverride, Alarme, Messwerte von einer integrierten Werkstückmessanordnung, die Fertigungszeit, die Durchlaufzeit usw.

Gemäß den Merkmalen des Anspruchs 4 wird bei bestimmten Ereignissen während der Bearbeitung des Werkstücks an einer Benutzerschnittstelle eine Aufforderung zur Eingabe der mindestens einen Zusatzinformation angezeigt. Derartige Ereignisse sind beispielsweise Alarme, Bahn-Overridereduzierung oder -erhöhung, Spindel-Overridereduzierung oder -erhöhung, manueller Werkzeugwechsel, Nullpunktverschiebung, Änderung von Offsets, usw. Beispielsweise wird der Maschinenbediener zu einer manuellen Eingabe in Form von Text, Bildern und/oder Videos aufgefordert.

Gemäß den Merkmalen des Anspruchs 5 enthält das Teileprogramm mindestens eine Eingabeaufforderung für den Maschinenbediener und fordert in Bezug zu der Anweisung oder der Folge von Anweisungen über die Benutzerschnittstelle zur Eingabe der mindestens einen Zusatzinformation auf. Derartige Aufforderungen können, ähnlich wie heute schon bekannt ist, über entsprechende Message-Befehle an den Maschinenbediener gegeben werden. Das können Aufforderungen zur Eingabe von Nullpunktverschiebungen und zum Setup des Werkstücks sein oder zur Eingabe von Hinweisen oder Notizen zu schwierigen Situationen bei der Bearbeitung. Der Werkstücksetup kann beispielsweise mit einem Kamerabild veranschaulicht werden.

Gemäß den Merkmalen des Anspruchs 6 umfasst die Zusatzinformation eine Modifikation der Anweisung oder der Folge von Anweisungen zur Bearbeitung, die von dem Benutzer für die Bearbeitung des weiteren Werkstücks übernommen werden kann. So werden beispielsweise Override-Eingaben beim Einfahren einer Serienproduktion automatisch erfasst und dem Teileprogramm, sofern der Maschinenbediener eine entsprechende Freigabe erteilt hat, überlagert. Die Freigabe kann für einzelne Anweisungen oder auch generell für das gesamte Teileprogramm erfolgen. Eine Änderung des Teileprogramms selbst ist so nicht notwendig. Vielmehr wird nur die beim Bearbeiten des Werkstücks gemachte Modifikation gespeichert. Sie steht dann für eine Folgefertigung zur Verfügung, entweder als Information oder nach einer entsprechender Freigabe auch direkt zur Modifizierung der Fertigung. Mit anderen Worten: Die einmal aufgezeichnete Zusatzinformation zu dem Teileprogramm kann dieses beim erneuten Abarbeiten beeinflussen, z.B. durch einen geänderten Override-Wert.

Die Aufgabe wird weiterhin durch ein Teileprogramm mit den Merkmalen des Anspruchs 13 gelöst. Erfindungsgemäß ist ein Teileprogramm der eingangs genannten Art dadurch ausgestaltet, dass die Anweisungen des Teileprogramms bei der Ausführung des Teileprogramms durch die Werkzeugmaschine diese zusammen mit der numerischen Steuerung veranlassen, ein erfindungsgemäßes Verfahren auszuführen.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: in einem Blockbild eine grundsätzliche Programm-struktur, die es ermöglicht, in Bezug zu einer An-weisung oder einer Folge von Anweisungen Zusatzin-formationen zu speichern und bei der Bearbeitung eines weiteren Werkstücks abzurufen,
- FIG 2: ein Ausschnitt aus einem Ablaufplan zur Speicherung von Zusatzinformation und
- FIG 3: ein Ausschnitt aus einem Ablaufplan zum Abrufen von Zusatzinformation.

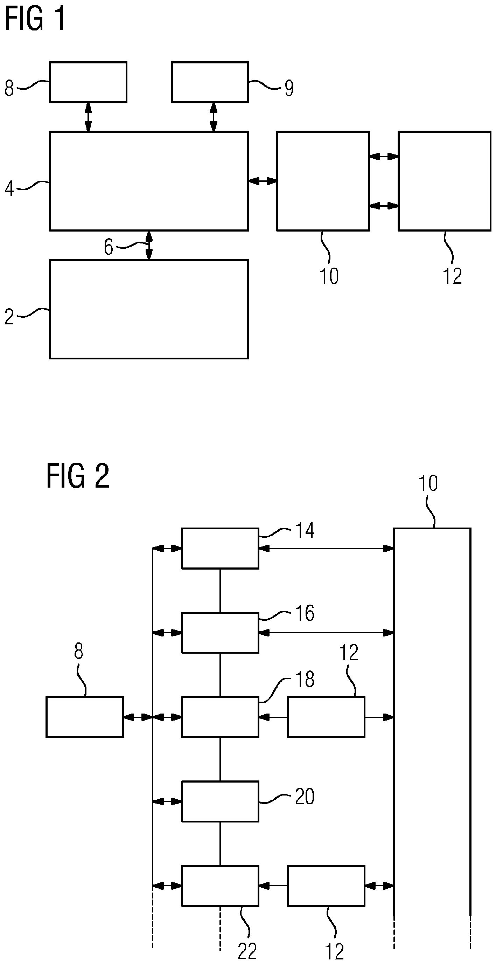

In FIG 1 ist eine numerisch gesteuerte Werkzeugmaschine 2 vereinfacht als Block dargestellt. Die Hauptaufgabe der Werkzeugmaschine 2 besteht in der Bearbeitung eines Werkstücks mit Werkzeugen, deren Bewegungen zueinander durch die Werkzeugmaschine 2 zusammen mit einer Werkzeugmaschinensteuerung 4 und einem darin vorhandenen Bearbeitungsprogramm vorgegeben wird. Die Werkzeugmaschinensteuerung 4 ist als CNC-Steuerung (CNC = Computerized Numerical Control) mit mindestens einer Recheneinheit ausgeführt. Die Werkzeugmaschine 2 ist mit der Werkzeugmaschinensteuerung über Signalleitungen 6 verbunden.

Der Zugang eines Anwenders zur Werkzeugmaschinensteuerung 4 und damit auch zur Werkzeugmaschine 2 erfolgt über eine Benutzerschnittstelle 8, die einen Bildschirm mit Menüansicht, ggf. mit zusätzlichen Tasten oder als Touch-Panel, und gegebenenfalls zusätzlich eine Tastatur umfasst. Eine weitere Kommunikationsschnittstelle 9 ist für einen DNC-Betrieb (DNC = Distributed Numerical Control) der Werkzeugmaschinensteuerung 4 vorgesehen. Darüber kann die Werkzeugmaschine 2 mit der Werkzeugmaschinensteuerung 4 in ein Computernetzwerk eingebettet werden. Die Bearbeitungsprogramme können beispielsweise bei Bedarf mit Hilfe des DNC-Systems von einem der angeschlossenen Computer in die Werkzeugmaschinensteuerung 4 der Werkzeugmaschine 2 geladen werden.

Die wesentliche Aufgabe der Werkzeugmaschine 2 ist, wie bereits erwähnt, die Bearbeitung von Werkstücken durch Relativbewegungen zwischen dem Werkzeug und dem Werkstück. Dazu muss die Werkzeugmaschinensteuerung 4 Sollwerte für Achsbewegungen generieren, die unter Einbeziehung der Antriebelemente an der Werkzeugmaschine 2 eine Kontur entsprechend einer Fertigungszeichnung oder einer CAD-Konstruktion (CAD = Computer Aided Design) realisieren. Um diese Information der Werkzeugmaschinensteuerung 2 zugänglich zu machen, wird sie in der Regel in ein für verschiedene Steuerungssysteme und verschiedene Maschinentypen einheitliches Teileprogramm 10 übertragen. Das Teileprogramm 10 ist in Sätzen aufgebaut, die Anweisungen umfassen, wobei eine Anweisung eine Bewegung zu einem Zielpunkt inklusive entsprechender Randbedingungen repräsentiert. In dem Teileprogramm 10 sind auch Sätze enthalten, mittels derer ein Teileprogramm-Ersteller Informationen an den Maschinenbediener gibt. Das kann über die sogenannten Message-Anweisungen erfolgen.

Das Teileprogramm 10 kann - wie bereits beschrieben - außerhalb der Werkzeugmaschinensteuerung 4 erstellt worden sein und dann zur Bearbeitung des Werkstücks in die Werkzeugmaschinensteuerung 4 transferiert oder geladen werden. Es kann aber auch über die Benutzerschnittstelle 8 direkt in der Werkzeugmaschinensteuerung 4 erstellt worden sein.

Das Teileprogramm 10 kann hierarchisch organisiert sein mit einem Hauptprogramm und Unterprogrammen, die von dem Hauptprogramm aufgerufen werden und dann in der Werkzeugmaschinensteuerung 4 als entsprechende Anweisungsfolge vorhanden sind.

Zusätzlich zu den oben angegebenen Anweisungen umfasst das Teileprogramm 10 Anweisungen, die dem Maschinenbediener die Möglichkeit geben, Zusatzinformation, die einen konkreten Bearbeitungsschritt oder eine konkrete Situation betreffen, zu speichern, so dass sie für die Bearbeitung eines Folgeauftrag zur Verfügung stehen. Dazu ist das Teileprogramm 10 mit einer LOG-Datei 12 verknüpft. Die Verknüpfung kann nach Bedarf einer bestimmten Anweisung, einer Folge von Anweisungen oder dem gesamten Steuerprogramm 10 zugeordnet sein. Die LOG-Datei 12 hat die Funktion eines steuerprogrammspezifischen und maschinenspezifischen Gedächtnisses. Die LOG-Datei 12 ist beispielsweise zusammen mit anderen Dokumenten in einem entsprechenden Werkstückverzeichnis auf einem Fertigungsserver gespeichert.

Nach einer generellen Aktivierung der Funktionalität "Speichern" des Gedächtnisses werden bei der Abarbeitung des Teileprogramms 10 entweder bei einer Simulation der Fertigung oder bei dem sogenannten Einfahren der Fertigung eines Werkstücks automatisch oder über Nutzereingaben Zusatzinformationen zum Fertigungsverlauf gesammelt und in der LOG-Datei 12 gespeichert.

Die automatische Aufzeichnung umfasst auch, dass bei bestimmten Ereignissen oder auftretenden Situationen, wie beispielsweise bei Alarmen, bei Bahn-Overridereduzierung/-erhöhung, bei Spindel-Overridereduzierung/-erhöhung, bei einem manuellen Werkzeugwechsel, bei einer Nullpunktverschiebung, bei einer Änderung von Offsets, usw. der Bediener zu manuellen Eingaben in Form von Text und/oder Bildern aufgefordert wird. Grenzen findet die automatische Aufnahme von Ereignissen dort, wo es sich um reine Handlungen oder Erläuterungen des Maschinenbedieners handelt, wie beispielsweise was, wo und wie eingespannt wird. In diesem Fall erfolgt eine Eingabeaufforderung an der Benutzerschnittstelle 8 über eine Maske, die es erlaubt, Text, ganze Screenshots oder Teile davon einzugeben.

Automatisch wird von der Werkzeugmaschinensteuerung 4 beispielsweise ermittelt, wann Grenzwerte, wie beispielsweise maximale Bahnabweichungen oder maximale Spindelmomente überschritten wurden. Dies lässt sich aus den auftretenden Alarmen rekonstruieren. Weiterhin sind Unterbrechungen im Bearbeitungsprogramm und die Gründe dazu interessant. Diese Information wird ebenfalls in der Werkzeugmaschinensteuerung 4 ermittelt. Auch die automatische Aufzeichnung einer Reduzierung oder einer Erhöhung von Bahngeschwindigkeit oder Spindeldrehzahl durch den Maschinenbediener, der sogenannte Override-Betrieb kann automatisch aufgezeichnet werden. Messwerte einer in der Werkzeugmaschine durchgeführten integrierten Werkstückmessung sind eine wichtige Zusatzinformation, ebenso wie die tatsächliche Fertigungszeit oder Durchlaufzeit. Die vorstehende Aufzählung von automatisch aufgezeichneten Ereignissen ist beispielhaft und nicht abschließend.

Beispiele für von dem Maschinenbediener einzugebende Zusatzinformationen über eine Aufforderung an der Benutzerschnittstelle sind Hinweise zu Nullpunktverschiebungen und zum Setup des Werkstücks, beispielsweise ein Kamerabild vom Werkstücksetup und Hinweise und Notizen zu schwierigen Situationen bei der Werkstückbearbeitung.

Wie vorstehend erläutert, kann das Speichen von Zusatzinformation zu einer konkreten Bearbeitung und/oder konkreten Situation über die Werkzeugmaschinensteuerung aus Maschinendaten oder durch den Maschinenbediener nach einer eigenständigen Aufforderung aus einer im Teileprogramm 10 enthaltenen Eingabeaufforderung erfolgen. Die Zusatzinformation wird dann in der LOG-Datei 12 gespeichert. Die Speicherung kann auch eine Verlinkung zu der dazugehörigen Anweisung oder der dazugehörigen Folge von Anweisungen im Teileprogramm 10 umfassen.

Alternativ oder zusätzlich zur Verlinkung der gesammelten Informationen mit dem Teileprogramm 10 kann auch eine Simulationen der Bearbeitung als Videostream oder ein Video der realen Bearbeitung gespeichert und genutzt werden, wobei die gesammelten Zusatzinformationen mit dem Videostream bzw. dem Video entsprechend verlinkt sind.

Diese Zusatzinformationen können bei einer Wiederholung der Fertigung, z.B. durch einen anderen Maschinenbediener oder auf einer anderen Werkzeugmaschine, genutzt werden und ersparen ein wiederholtes Zusammentragen von Informationen, die für die Bearbeitung relevant sind. Bei Wiederholung der Fertigung kann mittels entsprechender Freigaben festgelegt werden, ob die Zusatzinformationen bei der Werkstückbearbeitung ignoriert, automatisch genutzt, oder jeweils manuell bestätigt werden müssen. Die Zusatzinformation dient auch der Dokumentation einer konkreten Bearbeitung.

Wenn die Zusatzinformation Overrides betrifft, können diese nach dem Einfahren bei der Serienproduktion den entsprechenden originalen Anweisungen des Teileprogramms 10 überlagert werden, sofern der Maschinenbediener die Overrides freigegeben hat. Das Teileprogramm 10 als solches muss nicht mehr geändert werden, sondern die Modifizierung der Bearbeitung erfolgt lediglich über die Aktivierung der Funktion "Overrides übernehmen".

FIG 2 zeigt einen Ausschnitt eines Ablaufplans des Verfahrens zur Speicherung von Zusatzinformation, die eine konkrete Bearbeitung oder Situation bei der Bearbeitung eines Werkstücks erläutert. Die Zusatzinformation wird in der LOG-Datei 12 beispielsweise beim erstmaligen Rüsten und Einfahren der Bearbeitung der Werkzeugmaschine 2 ermittelt und steht dann für nachfolgende Bearbeitungsaufträge zur Verfügung.

Über die Benutzerschnittstelle 8 erfolgt eine generelle Freigabe 14 zur Aufnahme und Speicherung von Zusatzinformation. Diese Freigabe 14 ist in einem entsprechenden Anweisungssatz im Teileprogramm 10 enthalten. Während des Einfahrens der Fertigung zur Bearbeitung eines Werkstücks wird eine erste Eingabeaufforderung 16, wiederum initiiert aus dem Teileprogramm 10, über die Benutzerschnittstelle 8 an den Maschinenbediener ausgegeben. Die erste Aufforderung 16 umfasst beispielsweise die Frage: "Sollen Informationen zur Werkstückaufspannung gesichert werden?". Über ein Auswahlfeld in der ersten Aufforderung 16 kann der Maschinenbediener eingeben, ob diese Informationen als "Textnachricht", als "Foto" oder als "Video" gespeichert werden sollen. Nach Aktivierung der Eingabemöglichkeit "Video" kann der Maschinenbediener ein Video mit der erläuternden Information eingeben (Bezugszeichen 18) und in der LOG-Datei 12 speichern.

Bei der weiteren Bearbeitung soll beispielsweise eine Bohrung in das Werkstück eingebracht werden. Aufgrund einer Überschreitung des Spindelmoments bei diesem Bearbeitungsschritt wird eine weitere Eingabeaufforderung 20 mit dem Meldetext "Overload Spindelmoment detektiert" an der Benutzerschnittstelle 8 ausgegeben. Gleichzeitig mit der Meldung wird eine Auswahl von verschiedenen Antworten bereitgestellt, wie "Ignorieren", "Reaktion hinterlegen OVR", "Textnachricht", "Foto", "Video". Als Reaktion wählt der Maschinenbediener beispielhaft "Reaktion hinterlegen OVR" aus und gibt dann in einer Eingabe 22 eine Vorschubreduzierung auf 80 % ein. Diese Eingabe wird in der LOG-Datei 12 gespeichert zusammen mit einer entsprechenden Bezugnahme auf die Bohranweisung im Teileprogramm 10.

Zusätzlich kann der Maschinenbediener auch einen Simulationsstream der Bearbeitung oder einen Videofilm der Bearbeitung aktivieren und die Zusatzinformation jeweils zu den entsprechenden Stellen im Simulationsstream oder dem Videofilm verlinken.

Das Beispiel in FIG 2 zeigt, dass eine Aufforderung zur Eingabe von die Bearbeitung betreffende Zusatzinformation sowohl vom Teileprogramm 10 ausgehen kann als auch durch das Auftreten bestimmter Zustände innerhalb der Werkzeugmaschine 2 initiiert werden kann.

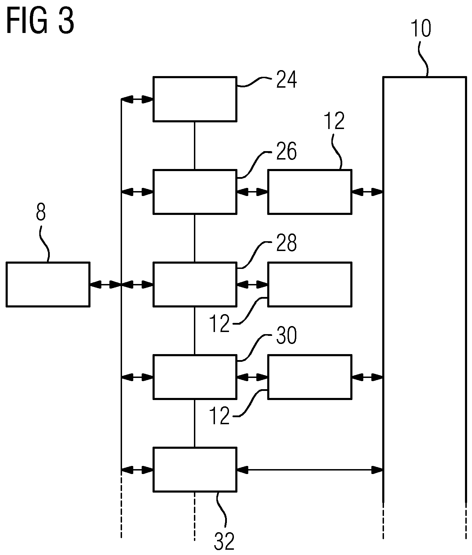

FIG 3 zeigt einen Ausschnitt eines Ablaufplans des Verfahrens zum Betrieb einer numerischen gesteuerten Werkzeugmaschine zur Nutzung der gespeicherten Zusatzinformation bei einer Folgefertigung. Auch dazu erfolgt zunächst eine generelle Freigabe 24, ob gespeicherte Zusatzinformationen genutzt werden sollen oder nicht.

Eine erste Mitteilung 26 wird vom Teileprogramm 10 veranlasst, wodurch der Maschinenbediener informiert wird, dass zur Aufspannung des Werkstücks ein Video vorliegt. Diese Information ist in der LOG-Datei 12 gespeichert. Der Maschinenbediener aktiviert den Abruf des Videos mit einer entsprechenden Eingabe 28. Bei der Weiterbearbeitung des Werkstücks wird im Zusammenhang dem Einbringen einer Bohrung eine Mitteilung 30 ausgegeben, dass bei der ersten Bearbeitung eine Vorschubreduzierung auf 80 % vorgenommen wurde. Auch diese Information kommt aus der LOG-Datei 12. Der Maschinenbediener kann dann in einer weiteren Eingabe 32 aktivieren, ob er ebenfalls entsprechend eine Vorschubreduzierung vornehmen möchte oder nicht. Analog werden weitere während der ersten Fertigung aufgenommenen Zusatzinformationen ausgegeben und können bei der Folgefertigung wahlweise übernommen oder ignoriert werden.

Die vorliegende Erfindung weist viele Vorteile auf. So ermöglicht die vorstehend anhand der Ausführungsbeispiele beschriebene kontextsensitive Sammlung von Informationen zur Bearbeitung eines Werkstücks eine kontinuierliche Verbesserung der Bearbeitung bei nachfolgenden Bearbeitungsaufträgen. Sie bietet weiterhin eine automatische Dokumentation der Bearbeitung. Wichtig ist in diesem Zusammenhang besonders, dass durch die Nutzung von Vorwissen Fehler bei der Wiederholung von Bearbeitungsaufträgen vermieden bzw. zumindest reduziert werden können. Das fertigungstechnische Wissen wird so, konkret auf ein Werkstück bezogen, systematisch und wiederauffindbar gespeichert. Es lässt sich auch für Trainingszwecke nutzen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betrieb einer numerischen gesteuerten Werkzeugmaschine (2) mit einer mit der Werkzeugmaschine (2) verbundenen numerischen Steuerung (4) mit einer Benutzerschnittstelle (8) und mit einem in der numerischen Steuerung (4) vorhandenen Teileprogramm (10), wobei das Teileprogramm (10) eine Folge von Anweisungen zur Bearbeitung eines Werkstücks umfasst und wobei die Werkzeugmaschine (2) entsprechend der Folge von Anweisungen das Werkstück bearbeitet,
**dadurch gekennzeichnet, dass** in Bezug zu einer Anweisung oder einer Folge von Anweisungen mindestens eine Zusatzinformation gespeichert wird (18, 22), die eine zu der Anweisung oder der Folge von Anweisungen gehörende konkrete Bearbeitung und/oder konkrete Situation erläutert, und dass die mindestens eine Zusatzinformation (18, 22) für eine Bearbeitung eines weiteren Werkstücks wiederum in Bezug zu der Anweisung oder der Folge von Anweisungen zur Verfügung steht (26, 28, 30, 32).

2. Verfahren nach Anspruch 1,
**dadurch gekennzeichnet, dass** die das Abspeichern und/oder das Abrufen der Zusatzinformation betreffende Funktionalität von dem Benutzer über die Benutzerschnittstelle (8) nach Bedarf aktiviert oder gesperrt werden kann (14, 24).

3. Verfahren nach Anspruch 1 oder 2,
**dadurch gekennzeichnet, dass** die mindestens eine Zusatzinformation automatisch während der Bearbeitung des Werkstücks ermittelt und gespeichert wird.

4. Verfahren nach einem der vorstehenden Ansprüche,
**dadurch gekennzeichnet, dass** bei bestimmten Ereignissen während der Bearbeitung des Werkstücks an der Benutzerschnittstelle (8) eine Aufforderung (20) zur Eingabe der mindestens einen Zusatzinformation angezeigt wird.

5. Verfahren nach einem der vorstehenden Ansprüche,
**dadurch gekennzeichnet, dass** das Teileprogramm (10) mindestens eine Eingabeaufforderung (16) für den Bediener enthält und in Bezug der Anweisung oder der Folge von Anweisungen über die Benutzerschnittstelle zur Eingabe der mindestens einen Zusatzinformation auffordert.

6. Verfahren nach einem vorstehenden Ansprüche,
**dadurch gekennzeichnet, dass** die Zusatzinformation eine Modifikation (22) der Anweisung oder der Folge von Anweisungen zur Bearbeitung umfasst, die von dem Benutzer für die Bearbeitung des weiteren Werkstücks übernommen werden kann (32) und die Bearbeitung dann entsprechend beeinflusst.

7. Verfahren nach einem der vorstehenden Ansprüche,
**dadurch gekennzeichnet, dass** die Zusatzinformation (28) dem Bediener auf der Benutzerschnittstelle (8) angezeigt wird.

8. Verfahren nach einem der vorstehenden Ansprüche,
**dadurch gekennzeichnet, dass** Art und Umfang der Speicherung der mindestens einen Zusatzinformation von dem Benutzer vorgebbar (20) ist.

9. Verfahren nach einem der vorstehenden Ansprüche,
**dadurch gekennzeichnet, dass** Art und Umfang des Abrufs und/oder der Verwendung der mindestens einen Zusatzinformation bei der Bearbeitung des weiteren Werkstücks von dem Benutzer vorgebbar (32) ist.

10. Verfahren nach einem der vorstehenden Ansprüche,
**dadurch gekennzeichnet, dass** die Zusatzinformation als Textdatei eingebbar und ausgebbar ist.

11. Verfahren nach einem der vorstehenden Ansprüche,
**dadurch gekennzeichnet, dass** die Zusatzinformation als Bilddatei eingebbar und ausgebbar ist.

12. Verfahren nach einem der vorstehenden Ansprüche,
**dadurch gekennzeichnet, dass** die Zusatzinformation als Videodatei eingebbar und ausgebbar ist.

13. Teileprogramm zur Bearbeitung eines Werkstücks mit einer Werkzeugmaschine, die mit einer numerischen Steuerung verbunden ist, umfassend Anweisungen, die bei Ausführung des Teileprogramms durch die Werkzeugmaschine diese zusammen mit der numerischen Steuerung veranlassen, das Verfahren nach einem der Ansprüche 1 bis 12 auszuführen.
